# EUROPÄISCHE PATENTSCHRIFT

(11) **EP 3 109 103 B1**
(45) Veröffentlichungstag und Bekanntmachung des Hinweises auf die Patenterteilung: **09.08.2017**
(21) Anmeldenummer: 15173315.1
(22) Anmeldetag: 23.06.2015
(51) Int. Cl.: B60S 1/08, C08G 77/04, C08L 83/04

(54) **SILIKONELASTOMER, ZUSAMMENSETZUNG UND OPTISCHES KOPPELELEMENT**
SILICONE ELASTOMER, COMPOSITION AND OPTICAL COUPLING ELEMENT
ÉLASTOMERE DE SILICONE, COMPOSITION ET ELEMENT DE COUPLAGE OPTIQUE

(43) Veröffentlichungstag der Anmeldung: 28.12.2016
(60) Teilanmeldung: 17176004.4
(73) Patentinhaber: PMA/Tools AG, 47877 Willich (DE)
(72) Erfinder: Coenen, Dominik, 41747 Viersen (DE); Münter, Michael, 41542 Dormagen (DE)
(74) Vertreter: DREISS Patentanwälte PartG mbB

(56) Entgegenhaltungen:
- EP-A1- 1 160 288
- EP-A2- 0 470 745
- DE-A1-102004 048 434
- DE-A1-102007 039 776
- US-B1- 6 581 484

## Beschreibung

Die Erfindung betrifft ein optisches Koppelelement zur Anordnung oder angeordnet zwischen einem Sensor und der Innenseite einer Fahrzeugscheibe, wobei das Koppelelement als manuell handhabbares Formteil ausgebildet ist.

Optische Koppelelemente der vorstehend genannten Art sind beispielsweise aus der DE 10 2007 039 776 A1, der DE 10 2004 048 434 A1 und der US 6,581,484 B1 bekannt und werden dazu verwendet, einen im Innenraum eines Fahrzeugs angeordneten optischen Sensor optisch mit der Fahrzeugscheibe zu koppeln. Für eine zuverlässige Funktion des Sensors ist es gewünscht, dass der Brechungsindex des für das Koppelelement verwendeten Materials dem Brechungsindex der Fahrzeugscheibe entspricht. Darüber hinaus ist es bevorzugt, dass die Transmission oder Durchlässigkeit des für das Koppelelement verwendeten Materials für Licht der relevanten Wellenlängen möglichst hoch ist. Dabei kann es sich je nach Anwendungsfall um Licht im sichtbaren oder im unsichtbaren Spektralbereich handeln.

Aufgrund der vorstehenden Anforderungen.werden im Stand der Technik als Materialien für das Koppelelement Silikonmaterialien verwendet. Hierbei können niedriger vernetzte Silikonmaterialien, sogenannte Silikongele, verwendet werden, oder es können höher vernetzte Silikone, nachfolgend Silikonelastomere genannt, verwendet werden.

Ein Beispiel für ein Silikongel ist in der EP 2 181 023 B1 offenbart. Eine Handelsbezeichnung für ein solches Silikongel ist Silgel 612. Derartige Materialien werden beispielsweise von der Firma Bayer oder von der Firma Wacker angeboten. Diese niedrigvernetzten Silikongele sind gallertartig, also nicht formstabil. Daher werden solche Koppelelemente "in situ" hergestellt, also als fließfähiges und dann aushärtendes Material in einen Raum im Gehäuse des optischen Sensors eingebracht. Das Sensorgehäuse wird anschließend an der Scheibe befestigt, wobei das Silikongel an der Scheibe anliegt. Eine solche Herstellung gestaltet sich sowohl bei der Erstmontage als auch bei der Reparatur einer Fahrzeugscheibe als aufwändig. Bei der Reparatur einer Fahrzeugscheibe oder eines Sensors kommt als Nachteil hinzu, dass das nicht formstabile Koppelelement zerstört wird und somit nicht wiederverwendbar ist.

Silikongele haben jedoch den Vorteil, dass ihre optischen Eigenschaften auch nach längerer Betriebsdauer konstant gut bleiben, auch dann, wenn das Fahrzeug höheren Belastungen ausgesetzt ist, beispielsweise einer direkten Sonneneinstrahlung über einen längeren Zeitraum hinweg. Zudem sind sie intrinsisch sehr weich und können sich der Scheibenkontur dadurch gut anpassen.

Etwas weniger weiche Silikongele sind beispielsweise unter der Bezeichnung "Semicosil 912" der Firma Wacker bekannt. Diese Silikongele werden ebenfalls, wie vorstehend beschrieben und bspw. aus der EP 1 027 204 A2 bekannt, "in situ" hergestellt. Damit gehen die vorstehend bereits beschriebenen Nachteile einher.

Höhervernetzte Silikonelastomere können abweichend von einer "in situ-Verarbeitung" als manuell handhabbare Formteile bereitgestellt werden, welche also von einem Einbauort entfernt hergestellt und dann manuell gehandhabt werden können. Solche Koppelelemente sind bspw. von der Firma Precision Replacement Parts Corporation, San Diego, Kalifornien/USA bekannt.

Weil die nicht weichgemachten Silikonelastomere für eine unmittelbare Anwendung zu hart sind, kann der Silikonrezeptur bei der Herstellung der Koppelelemente ein Öl als Weichmacherkomponente zugesetzt werden. Dadurch werden die Montage- und Anwendungseigenschaften deutlich verbessert, weil sich die Oberflächen der Formteile mit ihren an dem optischen Sensor und an der Innenseite der Fahrzeugscheibe anliegenden Oberflächen an die entsprechenden Kontaktflächen des optischen Sensors und der Innenseite der Fahrzeugscheibe anpassen können. Derart verbesserte Koppelelemente sind unter der Bezeichnung "SensorTack^{®} Ready" von der Anmelderin bekannt.

Es hat sich herausgestellt, dass die vorstehend beschriebenen, formstabilen Koppelelemente sich besonders einfach verarbeiten lassen und sogar wiederverwendbar sind, wodurch die Reparatur oder der Austausch einer Fahrzeugscheibe oder eines Sensors erheblich vereinfacht wird. Unter sehr ungünstigen Bedingungen, beispielsweise unter längerer und intensiver Sonneneinstrahlung insbesondere in warmen Klimaten, kann es jedoch vorkommen, dass das Koppelelement Öl aussondert. Dieses Öl ist dann im Innenbereich der Fahrzeugscheibe sichtbar. Der Austritt von Öl kann auch dazu führen, dass das Volumen des Koppelelements schrumpft, sodass sich die optischen Eigenschaften oder die Ankopplung des Koppelelements verändern, was zu einer negativen Beeinflussung der Funktion des optischen Sensors führen kann.

Hiervon ausgehend liegt der vorliegenden Erfindung die Aufgabe zugrunde, die Vorteile der Handhabbarkeit von höher vernetzten Silikonelastomeren unter Vermeidung von deren Nachteilen mit den Vorteilen der auch nach längerer Nutzungsdauer unverändert guten optischen Eigenschaften der niedriger vernetzten Silikongele kombinieren zu können.

Bei einem optischen Koppelelement der eingangs genannten Art wird die vorstehend genannte Aufgabe erfindungsgemäß dadurch gelöst, dass das Koppelelement ein nachfolgend beschriebenes Silikonelastomer enthält und/oder aus einer nachfolgend beschriebenen Zusammensetzung herstellbar oder hergestellt ist.

Erfindungsgemäß enthält das Silikonelastomer eine aus Öl oder einer Ölmischung gebildete Weichmacherkomponente oder eine Öl oder eine Ölmischung enthaltende Weichmacherkomponente, wobei das Öl oder zumindest ein Öl der Ölmischung eine Viskosität von kleiner oder gleich 350 mm²/s aufweist. Alternativ oder zusätzlich hierzu ist die Zusammensetzung aushärtbar zu einem Silikonelastomer, enthaltend Silikonkautschukkomponente, Vernetzerkomponente, Vernetzungskatalysator und Weichmacherkomponente, wobei die Weichmacherkomponente ein Öl oder eine Ölmischung ist oder enthält, wobei das Öl oder zumindest ein Öl der Ölmischung eine Viskosität von kleiner oder gleich 350 mm²/s aufweist.

Erfindungsgemäß wurde erkannt, dass es vorteilhaft ist, eine Weichmacherkomponente als Teil des Silikonelastomers oder einer Zusammensetzung beizubehalten, sodass das optische Koppelelement blasen- und lunkerfrei an die angrenzenden Kontaktflächen des optischen Sensors und der Innenseite der Fahrzeugscheibe anpassbar ist. Erfindungsgemäß ist oder umfasst diese Weichmacherkomponente ein Öl mit einer niedrigen kinematischen Viskosität (bezogen auf 25°C). Überraschenderweise kann ein unerwünschter Ölaustritt bei Silikonelastomeren durch die Verwendung eines solchen, niedrigviskosen Öls verhindert werden.

Beispielsweise weist das Öl oder zumindest ein Öl der Ölmischung eine Viskosität von kleiner oder gleich 200 mm²/s, vorzugsweise von kleiner oder gleich 100 mm²/s, insbesondere von kleiner oder gleich 50 mm²/s, insbesondere bevorzugt von kleiner oder gleich 25 mm²/s auf.

Die angegebenen Viskositäten gelten für eine Temperatur von 25°C und werden nach DIN 53019-1:2008-09 mit einem Rotationsviskosimeter ermittelt (Malvern Instruments, Messsystem Platte/Kegel 2°/60, d.h. Kegelwinkel 2°, Durchmesser 60 mm). Die Angaben beziehen sich auf die kinematische Viskosität v, die mit der dynamischen Viskosität η durch die Beziehung η = ν · ρ verknüpft ist, wobei ρ die Dichte des Öls bei der Messtemperatur darstellt. Bei einer Dichte ρ = 1000 kg/m³ sind die Zahlenwerte für die kinematische Viskosität ν in mm²/s und die dynamische Viskosität η in mPas identisch.

Besonders gute und über eine längere Gebrauchsdauer konstante optische Eigenschaften können dadurch erreicht werden, dass das Öl oder zumindest Öl der Ölmischung ein Silikonöl ist oder enthält. Vorzugsweise ist als Weichmacherkomponente ausschließlich Silikonöl vorgesehen.

Überraschenderweise ergeben sich die vorstehend beschriebenen Vorteile insbesondere auch dann, wenn ein ausgesprochen hoher Gewichtsanteil der Weichmacherkomponente vorliegt, beispielsweise mindestens 20% des Gesamtgewichts des Silikonelastomers beziehungsweise der Zusammensetzung. Weiter bevorzugte Gewichtsanteile sind mindestens 30% oder mindestens 40% oder mindestens 50% oder mindestens 60%. Besonders vorteilhaft ist es, dass eine besonders niedrige Ölviskosität sogar bei den zuletzt genannten, ungewöhnlich hohen Gewichtsanteilen des Öls zuverlässigen Schutz vor unerwünschtem Ölaustritt bewirkt. Dies gestattet die Herstellung manuell handhabbarer Koppelelemente aus Silikonelastomeren mit einer hinreichend geringen Härte bei gleichzeitig deutlich verbesserter Temperaturbeständigkeit in Bezug auf Ölaustritt.

Ein Beispiel für eine zu einem Silikonelastomer aushärtbare Zusammensetzung, welche eine Silikonkautschukkomponente, eine Vernetzerkomponente und einen Vernetzungskatalysator enthält, ist das System "Neukasil RTV 27" der Firma Altropol Kunststoff GmbH, Stockelsdorf, Deutschland. Dieses System umfasst einen additionsvernetzenden RTV-2 Silikonkautschuk "Neukasil RTV 27" und einen Vernetzer "Neukasil A 108" und kann zu einem Silikonelastomer vernetzt werden, welches mit einer Weichmacherkomponente in Form eines Öls versetzt ist. Bei einem solchen Öl kann es sich um Silikonöle handeln, die von der Fa. Carl Roth, Karlsruhe, Deutschland, unter den Bezeichnungen "Silikonöl M 350", "Silikonöl M 200" usw. erhältlich sind, wobei die Typbezeichnung zugleich die kinematische Viskosität in mm²/s angibt.

### Beispiel 1:

Es werden 100 g "Neukasil RTV 27" (Komponente A) und 10 g "Neukasil 108" (Komponente B) abgewogen, die vorab einzeln durch Aufrühren homogenisiert wurden. Komponente B wird sodann zügig in die Komponente A eingerührt, bis eine homogene Mischung mit Mischungsverhältnis A:B = 10:1 erhalten wird, wobei möglichst wenig Luft in die Mischung eingetragen wird. Die Mischung wird im Vakuum entgast (5 Minuten bei 20 mbar). Anschließend werden 165 g "Silikonöl M 20" (Viskosität 20 mm²/s) in die Mischung eingerührt, bis eine homogene Zusammensetzung entsteht, die einen Silikonölanteil von 60 Gew.-% aufweist.

Eine topfförmige Aluminiumform mit einem Durchmesser von 43 mm und einer Höhe von 12 mm wird mit der Zusammensetzung befüllt. Für ein Koppelelement zur Messung der Temperaturbeständigkeit wird eine Füllhöhe von 2 mm bis 3 mm gewählt. Für ein Koppelelement zur Härtemessung nach Shore D oder Shore 00 wird eine Füllhöhe von 6 mm gewählt.

Nach einer Vernetzungszeit von 24 Stunden bei Raumtemperatur wird das Koppelelement aus vernetztem Silikonelastomer aus der Form entnommen. Die Shore-Härte wird 24 Stunden nach Entnahme aus der Form nach DIN 53505 (Shore A) oder in Anlehnung an diese Norm (Shore 00) gemessen (Probendicke ca. 6 mm).

Das so erhaltene Koppelelement ist klar, transparent und manuell handhabbar und hat eine Härte von 30 Shore 00. Nach Shore A ist diese geringe Härte nicht mehr messbar.

Zur Prüfung der Temperaturbeständigkeit wird das Koppelelement (Dicke 2 mm bis 3 mm) flächig auf eine Glasplatte aufgelegt und 6 Stunden bei 105 °C gelagert, wobei die Glasplatte in 45°-Stellung zur Horizontalen positioniert wird. Nach Temperaturlagerung und Abnehmen des Koppelelements von der Glasscheibe ist kein Ölfilm auf der Glasscheibe oder auf dem Koppelelement erkennbar.

### Beispiele 2 bis 5:

Weitere Ausführungsbeispiele 2 bis 5 folgen der oben für das Ausführungsbeispiel 1 bereits erläuterten Vorgehensweise und unterscheiden sich von dieser lediglich in Bezug auf Viskosität und Menge des als Weichmacher zugesetzten Silikonöls. Einzelheiten und Ergebnisse sind zusammen mit den Angaben zum Ausführungsbeispiel 1 in Tabelle 1 dargestellt.

**Tabelle 1**

| ***Beispiel*** | ***Nr.*** | ***1*** | ***2*** | ***3*** | ***4*** | ***5*** |
|---|---|---|---|---|---|---|
| Mischungsverhältnis | A:B | 10:1 | 10:1 | 10:1 | 10:1 | 10:1 |
| Silikonöl, Viskosität | mm²/s | 20 | 50 | 100 | 200 | 350 |
| Silikonöl, Anteil an Zusammensetzung | Gew.-% | 60 | 35 | 15 | 10 | 5 |
| Härte (24 h) (Probendicke: 6 mm) | Shore A | --- | 19 | 28 | 31 | 33 |
| Härte (24 h) (Probendicke: 6 mm) | Shore 00 | 30 | 59 | 72 | 75 | 77 |
| Ölfilm / Ölaustritt (Probendicke: 2 mm bis 3 mm) | nach 6h bei 105°C | nein | nein | nein | nein | nein |

Weitere Variationen der beispielhaft dargestellten Rezepturen sind möglich. So kann durch leichte Unterdosierung der Vernetzerkomponente B eine geringere Vernetzungsdichte erzielt werden, indem bspw. Mischungsverhältnisse A:B von 10:0,95 oder 10:0,9 oder 10:0,85 eingestellt werden. Es wurde gefunden, dass diese Maßnahme die Temperaturstabilität in Bezug auf Ölaustritt weiter erhöht oder - bei gleichbleibender Temperaturstabilität - eine weitere Erhöhung der Ölmenge zulässt. Auf diese Weise lässt sich die Härte des Silikonelastomers weiter reduzieren, sodass weichere Koppelelemente herstellbar sind.

Erfindungsgemäß werden also in einem Silikonelastomer beziehungsweise in einer Zusammensetzung für ein optisches Koppelelement nicht Öle mit einer höheren Viskosität von mehr als 1000 mm²/s mit einem Gewichtsanteil von unter 20% verwendet, sondern niedrigerviskose Öle, bevorzugt mit höherem Gewichtsanteil.

## Patentansprüche

1. Optisches Koppelelement zur Anordnung oder angeordnet zwischen einem Sensor und der Innenseite einer Fahrzeugscheibe, ausgebildet als manuell handhabbares Formteil, **dadurch gekennzeichnet, dass** das Koppelelement enthält: ein Silikonelastomer, enthaltend eine aus Öl oder einer Ölmischung gebildete Weichmacherkomponente oder eine Öl oder eine Ölmischung enthaltende Weichmacherkomponente, wobei das Öl oder zumindest ein Öl der Ölmischung eine Viskosität von kleiner oder gleich 350 mm²/s, ermittelt bei einer Temperatur von 25°C nach DIN 53019-1:2008-09, aufweist, und/oder dass das Koppelelement herstellbar oder hergestellt ist aus:
einer Zusammensetzung, aushärtbar zu einem Silikonelastomer, enthaltend Silikonkautschukkomponente, Vernetzerkomponente, Vernetzungskatalysator und Weichmacherkomponente, wobei die Weichmacherkomponente ein Öl oder eine Ölmischung ist oder enthält, wobei das Öl oder zumindest ein Öl der Ölmischung eine Viskosität von kleiner oder gleich 350 mm²/s, ermittelt bei einer Temperatur von 25°C nach DIN 53019-1:2008-09, aufweist.

2. Optisches Koppelelement nach Anspruch 1, **dadurch**
**gekennzeichnet, dass** das Öl des Silikonelastomers oder zumindest ein Öl der Ölmischung des Silikonelastomers ein Silikonöl ist.

3. Optisches Koppelelement nach Anspruch 1 oder 2,
**dadurch gekennzeichnet, dass** der Gewichtsanteil der Weichmacherkomponente des Silikonelastomers mindestens 20% des Gesamtgewichts des Silkonelastomers beträgt.

4. Optisches Koppelelement nach einem der voranstehenden Ansprüche, **dadurch gekennzeichnet, dass** die Weichmacherkomponente der Zusammensetzung ein Silikonöl ist oder enthält.

5. Optisches Koppelelement nach einem der voranstehenden Ansprüche, **dadurch gekennzeichnet, dass** der Gewichtsanteil der Weichmacherkomponente der Zusammensetzung mindestens 20% des Gesamtgewichts der Zusammensetzung beträgt.

## Claims

1. An optical coupling element to be arranged or that is arranged between a sensor and the inside of a vehicle window pane, configured as a molded part that can be handled manually, **characterized in that** the coupling elements contains: A silicone elastomer, comprising a plasticizer component formed by oil or an oil blend or else comprising a plasticizer component containing oil or an oil blend, wherein the oil or at least one oil of the oil blend has a viscosity that is equal to or less than 350 mm²/s, determined at a temperature of 25°C according to DIN 53019-1:2008-09, and/or **in that** the coupling element can be produced or is produced out of: A composition that can be cured to form a silicone elastomer and that contains a silicone rubber component, a cross-linking component, a cross-linking catalyst and a plasticizer component, wherein the plasticizer component is or contains an oil or an oil blend, wherein the oil or at least one oil of the oil blend has a viscosity that is equal to or less than 350 mm²/s, determined at a temperature of 25°C according to DIN 53019-1:2008-09.

2. The optical coupling element according to claim 1, **characterized in that** the oil or at least one oil of the oil blend is a silicone oil.

3. The optical coupling element according to claim 1 or 2, **characterized in that** the percentage by weight of the plasticizer component is at least 20% of the total weight of the silicone elastomer.

4. The optical coupling element according to one of the preceding claims, **characterized in that** the plasticizer component is or contains a silicone oil.

5. The optical coupling element according to one of the preceding claims, **characterized in that** the percentage by weight of the plasticizer component is at least 20% of the total weight of the composition.

## Revendications

1. Elément de couplage optique destiné à être interposé ou agencé entre un capteur et le côté intérieur d'une fenêtre de véhicule, conçu comme une pièce moulée manipulable à la main, **caractérisé en ce que** l'élément de couplage comprend: un élastomère de silicone contenant un composant plastifiant formé à partir d'huile ou d'un mélange d'huiles, ou un composant plastifiant contenant de l'huile ou un mélange d'huiles, dans lequel l'huile ou au moins une huile du mélange huiles présente une viscosité inférieure ou égale à 350 mm²/s, obtenue par une température de 25°C selon DIN 53019-1:2008-09, et/ou **en ce que** l'élément de couplage peut être ou est fabriqué à partir: d'une composition, durcissable en un élastomère de silicone, contenant un composant de caoutchouc de silicone, un composant de réticulation, un catalyseur de réticulation et un composant plastifiant, dans lequel le composant plastifiant est ou contient une huile ou un mélange d'huiles, dans lequel l'huile ou au moins une huile du mélange huiles présente une viscosité inférieure ou égale à 350 mm²/s, obtenue par une température de 25°C selon DIN 53019-1:2008-09.

2. Elément de couplage optique selon la revendication 1, **caractérisé en ce que** l'huile de l'élastomère de silicone ou au moins une huile du mélange d'huiles d'élastomère de silicone est une huile de silicone.

3. Elément de couplage optique selon la revendication 1 ou 2, **caractérisé en ce que** la proportion en poids du composant plastifiant de l'élastomère de silicone est d'au moins 20% du poids total de l'élastomère de silicone.

4. Elément de couplage optique selon l'une quelconque des revendications précédentes, **caractérisé en ce que** le composant plastifiant de la composition est ou contient une huile de silicone.

5. Elément de couplage optique selon l'une quelconque des revendications précédentes, **caractérisé en ce que** la proportion en poids du composant plastifiant de la composition est d'au moins 20% du poids total de la composition.
